(19) Europäisches Patentamt
European Patent Office
Office européen des brevets

(11) Veröffentlichungsnummer: **0 220 612 B1**

(12) # EUROPÄISCHE PATENTSCHRIFT

(45) Veröffentlichungstag der Patentschrift: **18.04.90**

(51) Int. Cl.⁴: **C08F 8/00**, C08F 8/44, C08F 297/04

(21) Anmeldenummer: **86114295.8**

(22) Anmeldetag: **16.10.86**

(54) **Salze mehrwertiger Kationen von Block-Polymerisaten von Vinylaromaten und konjugierten Dienen.**

(30) Priorität: **24.10.85 DE 3537771**

(43) Veröffentlichungstag der Anmeldung: **06.05.87 Patentblatt 87/19**

(45) Bekanntmachung des Hinweises auf die Patenterteilung: **18.04.90 Patentblatt 90/16**

(84) Benannte Vertragsstaaten: **BE DE FR GB IT NL**

(56) Entgegenhaltungen:
**EP-A- 220 602**
**FR-A- 2 352 008**

**PATENTS ABSTRACTS OF JAPAN, Band 5, Nr. 195 (C-83)[867], 11. Dezember 1981; & JP-A-56 118 405 (ASAHI KASEI KOGYO K.K.) 17-09-1981**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen(DE)**

(72) Erfinder: **Bronstert, Klaus, Dr., Gartenstrasse 26, D-6719 Carlsberg(DE)**
Erfinder: **Mueller, Wolfgang F., Dr., Hahnenweg 20, D-6730 Neustadt(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 220 612 B1

## Beschreibung

Die Erfindung betrifft Block-Polymerisate aus Vinylaromaten und konjugierten Dienen mit Säureendgruppen, die als Salze von Metallkationen oder Metallkationenkomplexen, die mindestens zwei positive Ladungen tragen, vorliegen.

Blockpolymerisate von Styrol und Butadien, die mit Lithiumkohlenwasserstoff als Initiator erhalten werden und die Carboxylendgruppen tragen, sind bekannt. So z.B. aus der DE-OS 27 23 905, wobei man diese Verbindungen dadurch erhält, daß man zunächst Styrol und anschließend Butadien der anionischen Polymerisation unterwirft und dann das lebende Blockpolymerisat mit Alkylenoxid, z.B. Ethylenoxid, umsetzt und das Umsetzungsprodukt schließlich einer weiteren Reaktion mit einem cyclischen Dicarbonsäureanhydrid unterwirft. Man erhält Blockpolymerisate, die eine Carboxylendgruppe tragen. Derartige Blockpolymerisate haben je nach Styrolgehalt unterschiedliche Eigenschaften, z.B. können solche mit hohem Styrolgehalt als thermoplastische Kunststoffe Verwendung finden. Überwiegt der Gehalt an Polybutadieneinheiten, so können derartige Polymerisate als sogenannte thermoplastische Kautschuke eingesetzt werden, also als Formmassen, die bei Raumtemperatur kautschukelastische Eigenschaften haben und die durch thermoplastische Verformung verarbeitbar sind. Es zeigte sich, daß die mechanischen und verarbeitungstechnischen Eigenschaften zwar in den meisten Fällen für einen bestimmten Zweck ausreichen, jedoch für manche Anwendungen noch verbesserungsbedürftig sind.

Aufgabe der Erfindung war es, die mechanischen und die verarbeitungstechnischen Eigenschaften derartiger Block-Polymerisate mit Carboxylendgruppen zu verbessern.

Es wurde nun gefunden, daß diese Aufgabe durch Block-Polymerisate von Vinylaromaten und konjugierten Dienen mit Carboxylendgruppen gelöst wird, die als Salze der allgemeinen Formel vorliegen

$$[R\text{-}Y_a\text{-}X^{\ominus}]_n\ [M]^{n\oplus}$$

worin
M ein mehrwertiges Metallkation oder ein Metallkationenkomplex,
X eine Gruppierung der allgemeinen Formel

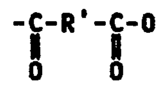 oder 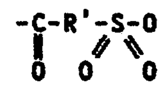

worin R' ein zweiwertiger organischer Rest ist, Y eine Alkylenoxideinheit und R ein Block-Polymerisat aus Vinylaromaten und konjugierten Dienen ist,
n gleich 2 bis 10 und
a gleich 1 bis 10 sein kann.

Ein weiterer Gegenstand der Erfindung ist ein Verfahren zur Herstellung von Block-Polymerisaten durch anionische Polymerisation von Vinylaromaten und konjugierten Dienen, Umsetzung der erhaltenen lebenden Block-Polymerisate mit Alkylenoxid und cyclischen Säureanhydriden, wobei man die erhaltenen Umsetzungsprodukte mit Metallalkoholaten, Metallhalogeniden oder Metalloxiden oder -hydroxiden umsetzt und überschüssiges Säureanhydrid entfernt oder durch Derivatisieren maskiert.

Außerdem sind Gegenstände der Erfindung die Verwendung derartiger Block-Polymerisate als thermoplastische Massen, zur Modifizierung thermoplastischer Massen, als Viskositätsindexverbesserer in Schmierölen, als Komponente in Schmelzhaftklebern oder als Formmassen sowie als Komponente von Formmassen.

Weitere Gegenstände der Erfindung ergeben sich aus der nachfolgenden Beschreibung.

Die erfindungsgemäßen Salze der Block-Polymerisate von Vinylaromaten und konjugierten Dienen mit Carboxylendgruppe haben hervorragende mechanische Eigenschaften bei gleichzeitig sehr gutem Verarbeitungsverhalten. Insbesondere haben die Verbindungen gegenüber Blockpolymerisaten gleicher Zusammensetzung und gleichen Molekulargewichts eine erhöhte Zugfestigkeit, erhöhten Elastizitätsmodul und hervorragende Schlagfestigkeitseigenschaften. Hervorzuheben ist die gute Fließfähigkeit.

In den Salzen der oben angegebenen allgemeinen Formel ist M ein Metallkation oder ein Metallkationenkomplex. Die Kationen bzw. die Kationenkomplexe haben mindestens zwei positive Wertigkeiten. In der Formel kann die Zahl n außer 2 auch 3 oder 4 sein. Bevorzugt sind Metallkationen, wie $Al^{+++}$, $Ti^{3+++}$, $Ca^{++}$, $Ba^{++}$, $Sr^{++}$, $Mg^{++}$, $Zn^{++}$, $Ni^{++}$, $Zr^{++}$ oder $Cd^{++}$. Es können aber auch Kationenkomplexe Verwendung finden, z.B. solche, die mehrere Metallkationen enthalten. Geeignet sind z.B. folgende Strukturen: $[Me\text{-}O[\text{-}Me(OR'')\text{-}O]_rMe]^{4+}$. Me kann $Al^{+++}$ oder $Cr^{+++}$ sein; r ist eine ganze Zahl und liegt zwischen 0 und 20, vorzugsweise 0 und 10; R'' ist Wasserstoff oder ein kurzkettiges Alkylradikal.

In der allgemeinen Formel ist X eine Gruppierung der allgemeinen Formel

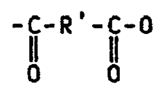 bzw. 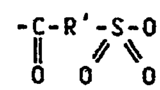

In dieser allgemeinen Formel ist R′ ein zweiwertiger organischer Rest. Derartige Gruppierungen ergeben sich, wenn man unter Lithiumalkyl-Katalyse erhaltene lebende anionische Block-Polymerisaten zunächst mit Alkylenoxid und anschließend mit cyclischen Säureanhydriden umsetzt. Als cyclische Säureanhydride kommen aliphatische, cycloaliphatische oder aromatische Dicarbonsäureanhydride oder cyclische Anhydride von Sulfocarbonsäuren in Frage. Beispiele für cyclische Anhydride von Sulfocarbonsäuren sind das β-Sulfopropionsäureanhydrid oder das o-Sulfobenzoesäureanhydrid. Bevorzugt sind derartige Gruppierungen, die von der Maleinsäure, der Bernsteinsäure, der Phthalsäure, der Glutarsäure oder der 1,8-Naphthalindicarbonsäure herrühren. R′ = $-CH_2-CH_2-$, $-CH=CH-$, $-CH_2-CH_2-CH_2-$,

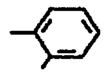 , 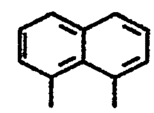

Die Gruppierung Y ist eine Alkylenoxidgruppierung. Bevorzugt sind solche Gruppierungen, die vom Ethylenoxid, Propylenoxid oder Styroloxid erhalten werden. In der allgemeinen Formel ist wie oben bereits ausgeführt, n = 2 oder eine ganze Zahl größer als 2, also vorzugsweise 3 oder 4, m = 1 bis 10, a eine Zahl von 1 bis 10, vorzugsweise 1 bis 4.

R ist ein Radikal eines Block-Polymerisats einer vinylaromatischen Verbindung und eines konjugierten Diens, die durch Lithiumalkyl-Katalyse auf den Ausgangsmonomeren erhalten wurde. Ausgangsstoffe für diese Block-Polymerisate sind monovinylaromatische Monomere, wie Styrol, seitenkettenalkylierte Styrole, wie α-Methylstyrol und die kernsubstituierten Styrole, wie Vinyltoluol oder Ethylvinylbenzol. Die monovinylaromatischen Monomeren können auch in Mischungen eingesetzt werden. Bevorzugt ist jedoch Styrol für sich allein. Beispiele von konjugierten Dienen, die in die Block-Polymerisate einpolymerisiert werden, sind Butadien, Isopren oder 2,3-Dimethylbutadien. Besonders günstig ist Butadien oder Isopren, wobei wiederum Butadien bevorzugt ist.

Sollen die erfindungsgemäßen Salze von Carboxylgruppen enthaltenden Block-Polymerisaten als thermoplastische Kunststoffe Verwendung finden, dann hat der Polymerisatanteil R mehr als 60 Gew.% monovinylaromatische Monomeren, vorzugsweise zwischen 70 und 90 Gew.% einpolymerisiert. Sollen die Block-Polymerisate als thermoplastische Elastomere Verwendung finden, dann ist der Gehalt an einpolymerisierten monovinylaromatischen Monomeren im Bereich von 3 bis 40 Gew.%. Der restliche Anteil, der sich auf 100 % ergänzt, entfällt auf die einpolymerisierten konjugierten Diene im Radikalrest R. Das Blockpolymerisat kann so aufgebaut sein wie A-B, wobei A die Polymerisateinheit symbolisiert, die die monovinylaromatischen Monomeren einpolymerisiert enthält und der Block B stellt den Polymerisatanteil dar, der aus den konjugierten Dienen aufgebaut ist. In diesem Fall kann entweder der Block A oder der Block B mit der Alkylenoxid-Einheit Y verbunden sein. Es können aber auch Blockpolymerisate vom Typ A-B-A oder B-A-B Verwendung finden. Die Blockgruppierungen können sich mehrfach wiederholen. Bevorzugt sind solche Polymerisateinheiten R, die lediglich aus zwei Blöcken A und B bestehen, wobei der Block B mit der Alkylenoxideinheit Y verbunden ist. Die Polymerblöcke bzw. Segmente A haben eine Molmasse, die im Bereich von 1500 bis 150 000, vorzugsweise im Bereich von 5000 bis 100 000 liegt und die Polymerblöcke bzw. Segmente B haben eine Molmasse von 2000 bis 200 000, vorzugsweise im Bereich von 20 000 bis 100 000. Der Übergang zwischen zwei Polymerblöcken A und B kann abrupt erfolgen (scharf getrennte Blöcke) oder der Übergang kann allmählich erfolgen (verschmierte oder kegelförmige Blöcke).

Solche Block-Polymerisate mit verschmierten oder kegelförmigen Blöcken erhält man, wenn man Mischungen aus z.B. Styrol und Butadien der Polymerisation unterwirft. Es können aber auch solche Blockpolymerisate Verwendung finden, worin die Blöcke A und Blöcke B Copolymerisate aus den monovinylaromatischen Monomeren und den konjugierten Dienen sind. Die Glasübergangstemperatur der Polymerblöcke bzw. Segmente A liegt bei solchen Polymerisaten bei mehr als 0°C, vorzugsweise über 20°C. Die Polymerblöcke bzw. Segmente B haben eine Glasübergangstemperatur von unter 0°C, vorzugsweise unter -15°C. Der Blockpolymerisatanteil R kann auch so aufgebaut sein, daß die olefinischen Doppelbindungen, die von den Dienbausteinen herrühren, ganz oder teilweise hydriert sind.

Die Einheit Y ist eine Alkylenoxideinheit, vorzugsweise vom Ethylenoxid, Propylenoxid oder Styroloxid herrührend. Die Zahl a kann 1 bis 10 sein, vorzugsweise 1 bis 4. Man erhält diese Alkylenoxideinheiten Y, indem man das noch lebende durch Lithiumalkyl-Katalyse erhaltene Polymerisat mit den Alkylenoxiden umsetzt. Bevorzugt erfolgt die Umsetzung im Verhältnis 1 Mol Alkylenoxid zu 1 Mol des lebenden Polymeren. Dabei entstehen Lithium-Alkoholatendgruppen.

Die Gruppierung X hat die oben angegebene allgemeine Formel. Sie wird eingebaut, indem man das Umsetzungsprodukt der lebenden Polymeren mit Alkylenoxiden mit cyclischen Säureanhydriden umsetzt.

Ein bevorzugtes Verfahren zur Herstellung der Block-Polymerisate ist die anionische Polymerisation der Monomeren, die Umsetzung der erhaltenen lebenden Block-Polymerisate mit Alkylenoxid und die anschließende Umsetzung mit cyclischen Säureanhydriden. Für die Umsetzung der polymeren Lithiumaloholate mit cyclischem Säureanhydrid müssen im allgemeinen mehr als stöchiometrische Mengen an Säureanhydrid eingesetzt werden, um einen ausreichenden Umsatz zu erzielen. Als ausreichend wird ein

Umsatz von wenigstens 50 % der Endgruppen, besser 60 %, optimal 70 %, angesehen. Derartige Umsätze werden im allgemeinen nur erreicht, wenn mindestens das 1,25 Äquivalente, besser 1,75 Äquivalente, cyclisches Säureanhydrid pro Lithium-Alkoholatendgruppe eingesetzt wird. Beim Aufarbeiten durch Fällen des Polymeren mit Alkohol oder Abtreiben des Lösungsmittels mit Wasserdampf (Dampfstrippen) wie auch beim Lagern des Polymeren unter Umgebungsbedingungen (Raumtemperatur, ca. 50 % relative Luftfeuchte) entstehen aus überschüssigem Anhydrid und Wasser oder Alkohol Disäuren oder Estersäuren, die den Polymeren das Kation entziehen; die entstehenden Polymeren mit protonierter kettenendständiger Säuregruppe zeigen dann ein physikalisches Verhalten, das sich nur wenig von dem üblicher Polymerer mit gleichem MGW unterscheidet. Es ist daher erforderlich, das überschüssige Anhydrid vor oder während der Aufarbeitung zu entfernen oder in Derivate zu überführen, die nicht mit dem Kation der endständigen Säuregruppe des Polymeren in Wechselwirkung treten.

Zur Entfernung des überschüssigen Anhydrides ist z.B. eine Vakuumbehandlung (1-100 mbar) bei hohen Temperaturen (160-240°C) geeignet. Das Ergebnis dieser Behandlung wird noch verbessert, wenn dem Polymeren vor der Behandlung geringe Mengen hochsiedender, inerter Schleppmittel zugesetzt werden. Geeignet sind z.B. Kohlenwasserstoffe wie Ethylbenzol, Xylol, Dodecan u.a.; besonders gut geeignet sind solche Schleppmittel, deren Siedepunkt in der Nähe oder etwas oberhalb der Siedepunkte der cyclischen Anhydride liegen, wie z.B. Tetralin, Dekalin, Diphenyl, Diphenylether oder eine technische Weißölfraktion mit einem Siedebereich z.B. von 230-260°C oder 240-280°C. Den Polymerisaten werden vor der Vakuumbehandlung 0,5-10 % Schleppmittel zugesetzt, bei hochsiedenden Schleppmitteln genügen kleinere Mengen, bei tiefer siedenden muß entsprechend mehr zugesetzt werden. Die Behandlung selber kann diskontinuierlich, z.B. in beheizten Vakuumschränken, erfolgen, wo es zweckmäßig ist, die Lösungsmittel aus der Polymerisatlösung in nicht zu großer Schichtdicke zu verdampfen. Die Behandlung kann aber auch kontinuierlich z.B. in Vakuumextrudern erfolgen. Üblicherweise wird so vorgegangen, daß die heiße Polymerlösung am hinteren Ende der Maschine aufgegeben wird, dann von den Schnecken unter Beheizung durch mehrere, z.B. 3 Entgasungszonen, gefördert wird, wobei in der letzten Entgasungszone die höchste Temperatur und das beste Vakuum herrschen. Nach Entfernung von Lösungsmitteln, Schleppmitteln und überschüssigem Anhydrid wird das Polymer durch Düsen ausgetragen, z.B. mit Wasser abgekühlt und zu Ballen gepreßt.

Das überschüssige Anhydrid kann jedoch auch durch Derivatisieren maskiert werden, z.B. durch Umsetzen mit Metallhydroxiden (z.B. NaOH) zu den Salzen der zweibasischen Säuren oder mit Metallalkoholaten zu den Salzen ihrer Halbester. Besonders günstig ist es, wenn die entstehenden Salze in der polymeren Matrix unlöslich sind und eine eigene Phase bilden, die nicht mehr mit den Metallkationen der endständigen Säuregruppe der Polymermoleküle in Wechselwirkung treten kann.

Eine weitere Möglichkeit, die überschüssigen Anhydride unschädlich zu machen, besteht darin, daß man die Polymerlösung vor der Aufarbeitung im molaren Verhältnis oder mit einem Überschuß an solchen Metallalkoholaten umsetzt, die dazu neigen, mehrkernige Komplexe zu bilden, in die die Salze der Halbester eingebunden werden. Die Umsetzung mit Metallalkoholaten kann dabei so erfolgen, daß die Zahl der Carboxylgruppen enthaltenden Polymerradikale m gleich der Zahl der Ladungen des Metallkations bzw. des Metallkationkomplexes n ist. Man kann aber auch, wie oben angegeben, die Verhältnisse so wählen, daß m 1 bis 10 ist, wobei n 2, 3 oder auch 4 ist. Die Umsetzung von Metallalkoholaten mit Carbonsäuren ist bekannt. Sie ist z.B. in Kirk-Orthmer "Encyclopedia of Chemical Technology", 2. Ausgabe, Band 1, Seite 832 bis 851 beschrieben.

Die Umsetzung der Carboxylgruppen enthaltenden Polymerisate kann an Stelle von Alkoholaten aber auch mit Metallalkylen erfolgen; beispielsweise Aluminiumtriethyl, Aluminiumtri-tertiärbutyl, Zinkdiethyl u.a., wobei jedoch Überschüsse zu vermeiden sind. Das Kation kann ferner in Form seiner Oxide oder Hydroxide zugesetzt werden.

Die erfindungsgemäßen Salze der Säuregruppen enthaltenden Block-Polymerisate können als thermoplastische Elastomere und zur Modifizierung von thermoplastischen Massen Verwendung finden. In diesem Fall sollen sie 3 bis 40 Gew.% Styrol und 97 bis 60 Gew.% % Dieneinheiten enthalten.

Enthalten sie, wie oben ausgeführt, mehr als 50 % Styrol, vorzugsweise 70 bis 90 % Styrol, wobei der Rest Dienblockpolymerisat-Einheiten sind, so kann man sie als thermoplastische hochschlagzähe und transparente Kunststoffe verwenden.

<u>Beispiele</u>

Herstellung der Säuregruppen enthaltenden Blockpolymerisate

In einen 5-l-Edelstahl-Normkessel wird gereinigtes und getrocknetes Cyclohexan unter Stickstoff-Atmosphäre eingefüllt. Dazu wird entstabilisiertes Styrol gegeben. Die Reaktionsmischung wird auf 50°C erwärmt. Zur Vernichtung von protonenaktiven Verunreinigungen wird der metallorganische Initiator (sek. Butyllithium) solange portionsweise (jeweils 5 ml einer 3 %igen Lösung in Hexan) zugesetzt, bis das Auftreten einer schwachen Rotfärbung das Einsetzen der Polymerisation anzeigt; jetzt wird unverzüglich die berechnete Initiatormenge zugegeben und damit die Polymerisation gestartet; bei 50°C wird das Styrol innerhalb von 60 Minuten quantitativ auspolymerisiert; dann wird das gereinigte und entstabilisierte Dien kontinuierlich in die lebende Reaktionsmischung eindosiert, dabei wird die Dosiergeschwindigkeit so eingestellt, daß die Innentemperatur 65°C nicht übersteigt. Nach beendeter Dienzugabe wird noch eine halbe Stunde bei 60 bis 65°C nachpolymerisiert, um quantitativen Umsatz des Diens zu gewährleisten (AB-Block). Dann wird auf 40°C abgekühlt. Bei 40°C wird das Alkylenoxid, gelöst in destilliertem Toluol, zu der lebenden Polymerlösung gegeben, um das Carbanion in das polymere Alkoholat-Anion zu überführen; für vollständigen Umsatz wird 1 Stunde gerührt. Dann wird das cyclische Säureanhydrid zugegeben und eine weitere Stunde bei 40°C gerührt. Es entsteht der polymere Halbester der Dicarbonsäure als Lithium-Salz.

Anschließend wird das mehrwertige Kation als Alkoholat gelöst in Toluol, THF oder in einem anderen inerten Kohlenwasserstoff-Lösungsmittel zu dem polymeren Halbester gegeben; die Metallalkoholatmenge ist mindestens der Säureanhydridmenge äquivalent. Vor der Aufarbeitung werden 0,5 Gew.% eines phenolischen Stabilisators, bezogen auf das Polymere, zugegeben. Dann wird die viskose Polymerlösung durch Eingießen in Isopropanol ausgefällt, zweimal mit Isopropanol gewaschen und unter $N_2$-Atmosphäre bei 80°C über Nacht im Vakuumtrockenschrank getrocknet.

Ausführung der einzelnen Beispiele siehe nachfolgende Tabellen.

Tabelle 1 und 2: Synthese und Analytik der Salze mehrwertiger Kationen von Blockpolymerisaten.

Tabelle 3: Mechanische Eigenschaften der Salze mehrwertiger Kationen von Blockpolymerisaten.

Tabelle 1

| Beispiel Nr. | Cyclohexan [ml] | BuLi [mMol] | A-Block Styrol [g] | A-Block Styrol [Gew.%] | B-Block Dien Typ | B-Block Dien [g] | B-Block Dien [Gew.%] | Alkylenoxid Typ | Alkylenoxid [mMol] | Anhydrid Typ | Anhydrid [mMol] |
|---|---|---|---|---|---|---|---|---|---|---|---|
| 1 | 3 000 | 11 | 93,6 | 16,4 | Bu | 478,4 | 83,6 | EO | 22 | BSA | 22 |
| 2 | 3 000 | 11 | 93,6 | 16,4 | Bu | 478,4 | 83,6 | EO | 22 | Tetrahydrophthalsäureanhydrid | 22 |
| 3 | 3 500 | 11 | 93,6 | 16,4 | Bu | 478,4 | 83,6 | PO | 22 | BSA | 22 |
| 4 | 3 000 | 11 | 93,6 | 17,0 | I | 457,0 | 83,0 | PO | 22 | MSA | 22 |
| 5 | 3 000 | 11 | 93,6 | 16,4 | Bu | 478,4 | 83,6 | Styroloxid | 22 | BSA | 22 |
| 6 | 3 000 | 11 | 93,6 | 16,4 | Bu | 478,4 | 83,6 | EO | 22 | Itaconsäureanhydrid | 22 |
| 7 | 3 000 | 11 | 93,6 | 16,4 | Bu | 478,4 | 83,6 | EO | 22 | Glutarsäureanhydrid | 22 |
| 8 | 3 000 | 9,2 | 93,6 | 16,4 | Bu | 478,4 | 83,6 | EO | 18 | MSA | 18 |
| 9 | 2 500 | 14 | 203 | 29,1 | Bu | 494 | 70,9 | EO | 28 | BSA | 28 |

BuLi = sec.-Butyllithium
EO = Ethylenoxid
PO = Propylenoxid
BSA = Bernsteinsäureanhydrid
MSA = Maleinsäureanhydrid

Tabelle 2

| Beispiel Nr. | Me-Verbindung Typ | [mMol] | $H_2O$ [mMol] | AB-Block VZ [$cm^3/g$] | vor Kation-Zugabe VZ [$cm^3/g$] | nach Kation-Zugabe VZ [$cm^3/g$] |
|---|---|---|---|---|---|---|
| 1-1 | Al-Isopropylat | 5,5 | - | 78 | 85 | 132 |
| 1-2 | Al-Isopropylat | 11 | - | 78 | 85 | 145 |
| 1-3 | Al-Isopropylat | 22 | - | 78 | 85 | 162 |
| 1-4 | Al-Isopropylat | 33 | - | 78 | 85 | 168 |
| 2-1 | Al-Isopropylat | 33 | - | 77 | 83 | 175 |
| 3-1 | Al-Isopropylat | 44 | - | 78 | 82 | 143 |
| 4-1 | - | - | - | 55 | 80 | - |
| 5-1 | Al-Isopropylat | 11 | 11 | 88 | 105 | 149 |
| 6-1 | Al-Isopropylat | 11 | 11 | 73 | 103 | 140 |
| 7-1 | Al-Isopropylat | 11 | 11 | 83 | 103 | 143 |
| 8-1 | Zn-Isopropylat | 36 | - | 100 | 129 | 151 |
| 9-1 | Al-Isopropylat | 60 | - | 58 | 80 | 109 |

VZ = Viskositätszahl, gemessen bei 25°C in Toluol
(0,5 g Polymer in 100 ml Toluol) gemäß DIN 51 562

Tabelle 3

| Beispiel Nr. | Meltindex (21,6 Kp; 190°C) vor Kation-Zugabe | Meltindex (21,6 Kp; 190°C) nach Kation-Zugabe | Zugfestigkeit bei 300 % Dehnung N/mm² vor Kation-Zugabe | Zugfestigkeit bei 300 % Dehnung N/mm² nach Kation-Zugabe | Reiß-dehnung % | Reißfestigkeit |
|---|---|---|---|---|---|---|
| 1-1 | 23 | 20 | nicht meßbar | 1,24 | 1.400 | 1,28 |
| 1-2 | 23 | 18 | nicht meßbar | 1,27 | 1.330 | 1,35 |
| 1-3 | 23 | 17 | nicht meßbar | 1,30 | 1.250 | 1,62 |
| 1-4 | 23 | 16 | nicht meßbar | 1,31 | 1.220 | 1,92 |
| 2-1 | 24 | 16 | nicht meßbar | 1,32 | 1.110 | 2,02 |
| 3-1 | 25 | 18 | nicht meßbar | 1,28 | 1.250 | 2,1 |
| 4-1 | 27 | 27 | nicht meßbar | nicht meßbar | 500 | - |
| 5-1 | 19 | 15 | nicht meßbar | 1,30 | 800 | 1,42 |
| 6-1 | 20 | 17 | nicht meßbar | 1,29 | 1.100 | 1,96 |
| 7-1 | 20 | 17 | nicht meßbar | 1,31 | 900 | 1,41 |
| 8-1 | 15 | 16 | nicht meßbar | 1,35 | 1.100 | 1,92 |
| 9-1 | 25 | 20 | nicht meßbar | 1,56 | 500 | 2,21 |

## Patentansprüche

1. Block-Polymerisat von Vinylaromaten und konjugierten Dienen mit Säureendgruppen, dadurch gekennzeichnet, daß es als Salz der allgemeinen Formel

$$[R{-}Y_a{-}X^{\ominus}]_n[M]^{n\oplus}$$

vorliegt, worin
M ein mehrwertiges Metallkation oder ein Metallkationenkomplex,
X eine Gruppierung der allgemeinen Formel

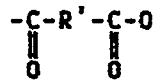 oder 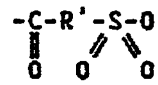

worin R' ein zweiwertiger organischer Rest ist,
Y eine Alkylenoxideinheit und
R ein Block-Polymerisat aus Vinylaromaten und konjugierten Dienen ist,
n gleich 2 bis 10 und
a gleich 1 bis 10 sein kann.

2 Block-Polymerisat nach Anspruch 1, dadurch gekennzeichnet, daß M gleich $Al^{+++}$, $CR^{+++}$, $Ti^{3+}$, $Mg^{++}$, $Ca^{++}$, $Ba^{++}$, $Sr^{++}$, $Zn^{++}$, $Ni^{++}$, $Zr^{++}$ oder $Cd^{++}$ ist.

3. Block-Polymerisate nach Anspruch 1, dadurch gekennzeichnet, daß R' gleich
$-CH_2-CH_2-$, $-CH{=}CH-$, $-CH_2-CH_2-CH_2$,

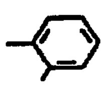, 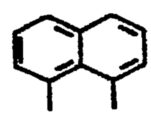, 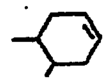, 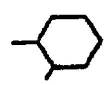, 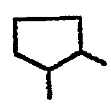

ist; wobei diese Reste selbst wiederum durch kurze Alkylketten und/oder Halogen substituiert sein können.

4. Verfahren zur Herstellung von salzartigen Block-Polymerisaten von Vinylaromaten und konjugierten Dienen nach Anspruch 1 durch anionische Polymerisation, Bildung von Umsetzungsprodukten der erhaltenen lebenden Block-Polymerisate mit Alkylenoxid und einem cyclischen Säureanhydrid und weitere Umsetzung, dadurch gekennzeichnet, daß man die Umsetzungsprodukte mit einem Metallalkoholat, Metallhalogenid, Metalloxid oder Metallhydroxid eines mehrwertigen Metalls weiter umsetzt.

5. Verfahren nach Anspruch 4, zur Herstellung von Block-Polymerisaten, dadurch gekennzeichnet, daß man einen Überschuß des cyclischen Säureanhydrids anwendet und diesen vor oder während der Isolierung des Block-Polymerisats abtrennt oder derivatisiert.

6. Verfahren nach Anspruch 5, zur Herstellung von Block-Polymerisaten, dadurch gekennzeichnet, daß man das überschüssige cyclische Säureanhydrid zusammen mit dem Lösungsmittel evtl. in Gegenwart eines hochsiedenden Schleppmittels bei hoher Temperatur im Vakuum abzieht.

7. Verfahren nach Anspruch 5, zur Herstellung von Block-Polymerisaten, dadurch gekennzeichnet, daß man das überschüssige cyclische Säureanhydrid durch Zugabe von Metallalkoholat in ein Salz des Halbesters der entsprechenden Dicarbonsäure überführt.

8. Verwendung des Block-Polymerisats nach Anspruch 1 zur Modifizierung thermoplastischer Massen.

9. Verwendung des Block-Polymerisats nach Anspruch 1 als Viskositätsindexverbesserer in Schmierölen.

10. Verwendung des Block-Polymerisats nach Anspruch 1 als Bestandteil eines Schmelzhaftkleberrs.

11. Verwendung des Block-Polymerisats nach Anspruch 1 als Formmasse.

## Claims

1. A block polymer of vinylaromatics and conjugated dienes which possesses acidic terminal groups, the said polymer being in the form of a salt of the formula

$$[R{-}Y_a{-}X^{\ominus}]_n[M]^{n\oplus}$$

where M is polyvalent metal cation or a metal cation complex, X is a group of the formula

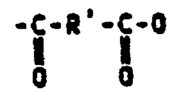 or 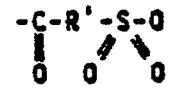

in which R′ is a divalent organic radical, Y is an alkylene oxide unit, R is a block polymer of a vinylaromatic and a conjugated diene, n is from 2 to 10 and a is from 1 to 10.

2. A block polymer as claimed in claim 1, wherein M is $Al^{+++}$, $Cr^{+++}$, $Ti^{3+}$, $Mg^{++}$, $Ca^{++}$, $Ba^{++}$, $Sr^{++}$, $Zn^{++}$, $Ni^{++}$, $Zr^{++}$ or $Cd^{++}$.

3. A block polymer as claimed in claim 1, wherein R′ is
$-CH_2-CH_2-$, $CH=CH-$, $-CH_2-CH_2-CH_2$,
or
and these radicals in turn can be substituted by short

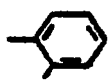 , 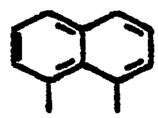 , 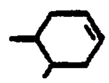 , 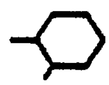 , 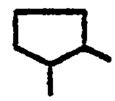

alkyl chains and/or halogen.

4. A process for the preparation of a salt-like block polymer of vinylaromatics and conjugated dienes as claimed in claim 1 by anionic polymerization, formation of reaction products of the resulting living block polymer with an alkylene oxide and a cyclic anhydride and further reaction, wherein the reaction product is reacted further with a metal alcoholate, metal halide, metal oxide or metal hydroxide of a polyvalent metal.

5. A process as claimed in claim 4 for the preparation of a block polymer, wherein excess cyclic anhydride is used and is separated off or derivatized before or during isolation of the block polymer.

6. A process as claimed in claim 5 for the preparation of a block polymer, wherein the excess cyclic anhydride is stripped off together with the solvent, in the presence or absence of a high boiling entraining agent, at elevated temperatures and under reduced pressure.

7. A process as claimed in claim 5 for the preparation of a block polymer, wherein the excess cyclic anhydride is converted to a salt of the half ester of the relevant dicarboxylic acid by adding metal alcoholate.

8. Use of a block polymer as claimed in claim 1 for modifying thermoplastic materials.

9. Use of a block polymer as claimed in claim 1 as a viscosity index improver in lubricating oils.

10. Use of a block polymer as claimed in claim 1 as a component in a hot melt adhesive.

11. Use of a block polymer as claimed in claim 1 as a molding material.

## Revendications

1. Polymère bloc de monomères vinylaromatiques et de diènes connugés avec des groupements terminaux acides, caractérisé en ce qu'il se présente sous forme de sel de formule générale.

$$[R-Y_a-X^{\ominus}]_n[M]^{n\oplus}$$

dans laquelle
M est un cation métallique polyvalent ou un complexe cationique métallique,
X est un groupement de formule générale

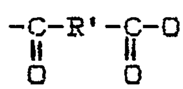 ou 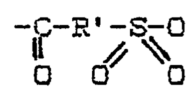

dans laquelle R′ est un reste organique bivalent
Y est un motif oxyde d'alkylène et
R est un polymère bloc d'un monomère vinylaromatique et d'un diène conjugué,
n peut être de 2 à 20 et
a peut être de 1 à 10.

2. Polymère bloc selon la revendication 1, caractérisé en ce que M est $Al^{+++}$, $CR^{+++}$, $Ti^{+++}$, $Mg^{++}$, $Ca^{++}$, $Ba^{++}$, $Sr^{++}$, $Zn^{++}$, $Ni^{++}$, $Zr^{++}$ ou $Cd^{++}$.

3. Polymère bloc selon la revendication 1, caractérisé en ce que R′ est
$-CH_2-CH_2-$, $-CH=CH-$, $-CH_2-CH_2-CH_2-$,

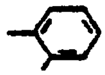 , 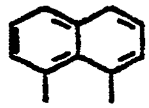 , 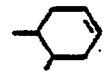 , 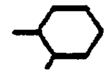 , 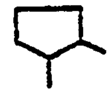

ces restes pouvant eux-mêmes être en outre substitués par des chaînes alkyle courtes et/ou des atomes d'halogène.

4. Procédé de préparation de polymères blocs de monomères vinylaromatiques et de diènes conjugués, sous forme de sels selon la revendication 1, par polymérisation anionique, formation des produits de réaction du polymère bloc actif obtenu avec un oxyde d'alkylène et un anhydride d'acide cyclique et réaction ultérieure, caractérisé en ce qu'on fait réagir ultérieurement les produits de réaction avec un alcoolate, un halogénure, un oxyde ou un hydroxyde de métal polyvalent.

5. Procédé selon la revendication 4 pour la préparation de polymères blocs, caractérisé en ce qu'on utilise un excès de l'anhydride d'acide cyclique et on sépare ou on transforme en dérivé celui-ci avant ou pendant l'isolement du polymère bloc.

6. Procédé selon la revendication 5 pour la préparation de polymères blocs, caractérisé en ce qu'on élimine l'anhydride d'acide en excès en même temps que le solvant éventuellement en présence d'un produit d'entraînement de point d'ébullition élevé, à température élevée.

7. Procédé selon la revendication 5 pour la préparation de copolymères blocs, caractérisé en ce qu'on transforme l'anhydride d'acide en excès, par addition d'un alcoolate métallique, en un sel du demiester de l'acide dicarboxylique correspondant.

8. Utilisation du polymère bloc selon la revendication 1, pour la modification de masses thermoplastiques.

9. Utilisation du polymère bloc selon la revendication 1, comme agent d'amélioration de l'indice de viscosité des huiles de graissage.

10. Utilisation du polymère bloc selon la revendication 1, comme constituant d'un adhésif fusible.

11. Utilisation du polymère bloc selon la revendication 1, comme masse à mouler.